# EUROPÄISCHE PATENTSCHRIFT

(11) **EP 4 311 427 B1**
(45) Veröffentlichungstag und Bekanntmachung des Hinweises auf die Patenterteilung: **20.11.2024**
(21) Anmeldenummer: 23186487.7
(22) Anmeldetag: 19.07.2023
(51) Int. Cl.: A01F 15/14, B65B 27/12

(54) **BINDEVORRICHTUNG FÜR EINE BALLENPRESSE**
BINDING DEVICE FOR A BALING PRESS
DISPOSITIF DE LIAGE POUR PRESSE À BALLES

(30) Priorität: 25.07.2022 DE 102022118538
(43) Veröffentlichungstag der Anmeldung: 31.01.2024
(73) Patentinhaber: Maschinenfabrik Bernard Krone GmbH & Co. KG, 48480 Spelle (DE)
(72) Erfinder: QUAST, DAVID, 48431 Rheine (DE)

(56) Entgegenhaltungen:
- CA-A- 428 913
- DE-A1- 102008 000 988
- DE-A1- 102017 003 882

## Beschreibung

Die vorliegende Erfindung betrifft eine Bindevorrichtung für eine Ballenpresse nach dem Oberbegriff von Anspruch 1 sowie eine Ballenpresse nach dem Oberbegriff von Anspruch 16.

Ballenpressen werden in der Landwirtschaft eingesetzt, um Erntegut wie z. B. Heu oder Stroh, welches zuvor aufgenommen wurde, zu Ballen zu verpressen. Das Erntegut wird normalerweise durch eine Pick-up, die in die Ballenpresse integriert ist, vom Boden aufgenommen. Im Falle einer Quaderballenpresse erfolgt das Verpressen des aufgesammelten Ernteguts in zwei Stufen. Zunächst wird das von der Pick-up übernommene und ggf. durch eine Schneidvorrichtung geschnittene Erntegut durch eine Fördervorrichtung bzw. Sammelvorrichtung innerhalb einer Sammelkammer weitergefördert und dabei gerafft bzw. vorverdichtet. Der Sammelkammer ist eine Presskammer oder ein Presskanal nachgeordnet. Dort wirkt ein oszillierender Presskolben auf das Erntegut ein und führt das eigentliche Verpressen durch. Es wird somit vorverdichtetes Erntegut portionsweise in den Presskanal überführt, wo ein sukzessiver Aufbau des Quaderballens erfolgt.

Wenn der Quaderballen eine vorgesehene Größe erreicht hat, wird er mittels eines Bindematerials oder Bindemittels gebunden, bevor er ausgeworfen wird. Bei dem Bindemittel kann es sich z.B. um ein Garn oder ein thermoplastisches Band handeln. Bei einem sog. Einfachknoter wird im Zuge des Bindevorgangs ein Endbereich des Bindemittels an einem Ende des Ballens an dessen Oberseite festgehalten, wobei der Bindemittelstrang entlang der Oberseite zum gegenüberliegenden Ende, danach abwärts und anschließend in entgegengesetzter Richtung unterhalb des Ballens zurückgeführt wird. Ein sich anschließender Abschnitt des Bindemittelstrangs wird von einer Bindenadel geführt. Dabei sind eine Mehrzahl von Bindenadeln an einer Nadelschwinge befestigt, die gegenüber dem Presskanal beweglich angeordnet ist. Sie kann insbesondere von einer ersten Position außerhalb des Presskanals in eine zweite Position verstellt werden, in der die Bindenadeln aufwärts in den Presskanal hineinragen und teilweise durch ihn hindurchragen, wobei jede Bindenadel einen Bindemittelstrang mitführt. Dieser kann mit dem festgehaltenen Endbereich verbunden werden, entweder durch Verknoten oder durch Verschweißen, wodurch eine geschlossene Schleife um den Ballen gebildet ist. Diese kann vom restlichen Bindemittelstrang abgetrennt werden, wobei wiederum ein neu entstehender Endbereich festgehalten wird. Der Ballen kann ausgeworfen werden und eine neue Ballenbildung kann beginnen. Bei einem sog. Doppelknoter, welcher hier nicht weiter besprochen werden soll, unterscheidet sich der Bindevorgang in einigen Aspekten, insbesondere insofern, als Bindemittel von unten sowie von oben zugeführt wird.

Der Bindemittelstrang ist anfangs überwiegend auf einer Bindemittelrolle aufgerollt, während ein Teil ausgehend von der Bindemittelrolle über verschiedene Umlenk- und/oder Führungselemente zur Bindenadel geführt wird. Um ein ungewolltes Abrollen von Bindemittel zu verhindern, ist in der Regel eine Bremsvorrichtung vorgesehen, die die Bindemittelrolle blockiert, bis eine auf den Bindemittelstrang ausgeübte Zugkraft eine Bremslösekraft übertrifft. Eine derartige Bremsvorrichtung ist z.B. in der DE 10 2017 003 882 A1 oder der DE 10 2017 003 884 B4 beschrieben. Die generell bestehenden Anforderungen an eine hohe Prozessgeschwindigkeit führen zu einer schnellen Bewegung der Nadelschwinge. Bei einer Einführbewegung aus der ersten in die zweite Position muss daher schnell Bindemittel nachgeführt werden, welches von der Bindemittelrolle stammt. Schon aufgrund des Trägheitsmoments der Rolle ist ein Abrollen synchron zur Bewegung der Nadelschwinge nicht möglich. Daher wurde bereits vorgeschlagen, den Bindemittelstrang über eine Pufferanordnung oder Speicheranordnung zu führen, die gewissermaßen einen Teil des Bindemittelstrangs zwischenspeichert. Genauer wird der Bindemittelstrang über wenigstens ein elastisch auslenkbares Führungselement, normalerweise eine Führungsrolle, umgelenkt. Wird seitens der Bindenadel ein Zug ausgeübt, kann das Führungselement diesem Zug nachgeben, wodurch Bindemittel schnell zur Verfügung gestellt wird. Lässt der Zug seitens der Bindenadel nach, kehrt das Führungselement elastisch in seine Ausgangsposition zurück, wobei es Bindemittel von der Bindemittelrolle abzieht. Eine derartige Speicheranordnung ist ebenfalls in der DE 10 2017 003 884 B4 beschrieben.

Problematisch ist dabei die hohe Belastung für die Bindenadel, die gegen die Rückstellkraft des Führungselements arbeiten muss, und dies in einer Situation, in welcher ohnehin bei kurzen Taktzeiten hoher Beschleunigung wirken. Somit muss die Nadelschwinge stabil und schwer ausgelegt werden, um der entsprechenden Belastung standzuhalten. Dies wiederum wirkt sich auf die Beschleunigungs- und Verzögerungskräfte aus, die nötig sind, um die Nadelschwinge wie vorgesehen zu bewegen. Ein weiteres Problem kann darin bestehen, dass das Führungselement bei Erreichen seiner Ausgangslage schlagartig stehen bleibt, womit die Spannung im Bindemittelstrang plötzlich nachlässt, da sich die Bindemittelrolle trägheitsbedingt weiterdreht. Es kommt zu einem Erschlaffen des Bindemittelstrangs, so dass dieser aus der Führung springen kann. Um dies zu vermeiden, kann die Rückhaltekraft verstärkt werden, so dass die Bindemittelrolle schneller anhält. Dies bedeutet aber wiederum, dass eine entsprechend größere Kraft nötig ist, um überhaupt Bindemittel abzurollen.

Die Druckschrift DE 10 2008 000 988 A1 offenbart eine Großballenpresse in der Art einer Abfallpresse. Die Abfallpresse umfasst eine Bindeeinrichtung mit einer Knotereinrichtung zum Binden eines Oberfadens und eines Unterfadens mit zwei Knoten zu einer Schlinge um den Großballen. An einem Ende einer Durchzugsnadel ist ein steuerbarer Klammerhaken angebracht, um beide Fäden in den Wirkbereich der Kontereinrichtung zu ziehen.

Aufgabe der Erfindung ist es, eine zuverlässige und effiziente Führung eines Bindemittelstrangs zu ermöglichen.

Die Aufgabe wird gelöst mit einer Bindevorrichtung für eine Ballenpresse, mit den Merkmalen des unabhängigen Patentanspruchs 1. Vorteilhafte Ausführungsformen sind den abhängigen Ansprüchen entnehmbar.

Dafür wird eine Bindevorrichtung für eine Ballenpresse geschaffen, aufweisend eine gegenüber einem Rahmen der Ballenpresse verstellbare Nadelschwinge mit einer Mehrzahl von Bindenadeln zum Zuführen jeweils eines Bindemittelstrangs in einen Presskanal, wobei die Bindevorrichtung mit einer Mehrzahl von Führungselementen für jeden Bindemittelstrang einen von einer Bindemittelrolle ausgehenden Führungsweg definiert, wobei jede Bindenadel sich von einer Basis zu einer Spitze erstreckt, an welcher ein erstes Nadel-Führungselement angeordnet ist, und wobei die Nadelschwinge durch eine Einführbewegung aus einer ersten Position, in welcher die Bindenadeln außerhalb des Presskanals angeordnet sind, in eine zweite Position verstellbar ist, in welcher die Bindenadeln wenigstens teilweise in den Presskanal eingeführt sind, und durch eine Rückzugsbewegung in die erste Position zurück verstellbar ist, sowie weiterhin aufweisend ein von der Nadelschwinge unabhängiges Zusatz-Führungselement, welchem das erste Nadel-Führungselement im Führungsweg nachgeordnet ist.

Bei der Ballenpresse handelt es sich normalerweise um eine Quaderballenpresse oder Großpackenpresse. Die Ballenpresse kann selbstfahrend mit eigenem Fahrantrieb oder als Anhänger ohne eigenen Fahrantrieb ausgebildet sein. Sie weist einen Presskanal auf, in welchem die eigentliche Ballenformung und der Pressvorgang erfolgen. Der Presskanal weist eine Kanallängsachse auf, zu welcher er normalerweise überwiegend parallel verläuft. Die Kanallängsachse kann mit einer Längsachse der Ballenpresse übereinstimmen, sie kann aber auch gegenüber derselben geneigt sein. Typischerweise ist im Presskanal ein Presskolben angeordnet, der dazu eingerichtet ist, durch eine oszillierende Bewegung auf das Erntegut einzuwirken und es so zu verpressen. Hinsichtlich des Erntegutflusses ist dem Presskanal in der Regel eine Sammelkammer vorgeschaltet, in welcher eine Fördervorrichtung bzw. Sammelvorrichtung dazu eingerichtet ist, das Erntegut weiterzufördern und dabei vorzuverdichten.

Um die Form des fertigen Ballens zu sichern, wird er innerhalb des Presskanals mit einem Bindemittel versehen. Bei dem Bindemittel, welches auch als Bindematerial bezeichnet werden kann, kann es sich um ein Garn oder ein thermoplastisches Band handeln (z.B. aus PET). Es wird normalerweise in einer Mehrzahl von separaten Schleifen, die quer zur Kanallängsachse beabstandet sind, um den Ballen gelegt. Zur Bildung der jeweiligen Schleife wird ein Endbereich des Bindemittels, welcher an einem Ende des Ballens festgehalten wird, mit einem Abschnitt verbunden, der zu diesem Zweck von außen in den Presskanal geführt werden muss. Um den jeweiligen Abschnitt in den Presskanal zu führen, ist jeweils eine Bindenadel vorgesehen. Eine Nadelschwinge weist dabei eine Mehrzahl von Bindenadeln auf, die z.B. an einem gemeinsamen Träger befestigt sein können. Die Anzahl der Bindenadeln an der Nadelschwinge entspricht der Anzahl der Bindemittelstränge. Sie ist grundsätzlich nicht begrenzt, kann allerdings typischerweise zwischen vier und acht liegen. Jede der Bindenadeln führt Bindemittel in den Presskanal, wobei die Zuführung normalerweise von einer Unterseite des Presskanals aus erfolgt.

Die Nadelschwinge ist Teil der erfindungsgemäßen Bindevorrichtung, wobei die Bindevorrichtung allgemein Komponenten aufweisen kann, die direkt mit dem Bindevorgang in Zusammenhang stehen, aber auch Komponenten, die nicht oder nur indirekt am Bindevorgang beteiligt sind. Insofern ist der Begriff "Bindevorrichtung" nicht einschränkend auszulegen. Die Nadelschwinge ist gegenüber dem Rahmen verstellbar. Die Verstellung erfolgt durch einen motorischen Antrieb, an den die Nadelschwinge wenigstens zeitweise koppelbar ist. Der motorische Antrieb weist wenigstens einen Motor auf, der bspw. als Verbrennungsmotor, Elektromotor, Hydraulikmotor oder in anderer Weise ausgebildet sein kann. Die Nadelschwinge ist in aller Regel nicht unmittelbar an den jeweiligen Motor gekoppelt ist, sondern über verschiedene Elemente zur Kraftübertragung und/oder -umlenkung sowie ggf. zur Über- oder Untersetzung. Allgemein ist die Nadelschwinge gegenüber dem Rahmen der Ballenpresse verstellbar, wobei sie normalerweise um eine parallel zur Querachse der Ballenpresse verlaufende Schwingen-Schwenkachse schwenkbar ist.

Die Bindevorrichtung weist für jeden Bindemittelstrang eine Mehrzahl von Führungselementen auf. Ein Führungselement ist dazu eingerichtet, den Bindemittelstrang wenigstens einseitig zu führen. In der Regel ist es auch dazu eingerichtet, den Bindemittelstrang umzulenken, womit ein entsprechendes Führungselement auch als Umlenkelement bezeichnet werden kann. Ein Führungselement kann als drehbar gelagerte Führungsrolle oder Umlenkrolle ausgebildet sein. Es könnte sich aber auch um ein Paar von feststehenden, zueinander beabstandeten Wellen handeln, zwischen denen der Bindemittelstrang hindurchgeführt ist. Eventuell könnte es sich sogar um eine einzelne feststehende Welle handeln. Insgesamt definieren die Führungselemente einen Führungsweg, der von einer Bindemittelrolle ausgeht. Die Bindemittelrolle kann zumindest in einigen Ausführungsformen auch als Abrollvorrichtung, Rollenspeicher oder dergleichen bezeichnet werden. In jedem Fall handelt es sich um eine Anordnung, in welcher das Bindemittel rollenartig aufgewickelt ist und von der Bindemittelrolle abgerollt und/oder abgezogen werden kann. Falls es sich bei dem Bindemittel um ein Band handelt, ist dieses typischerweise auf einen Kern aufgewickelt. Im Falle von Garn ist normalerweise kein Kern vorhanden, und die kernlose Bindemittelrolle kann in einem Aufnahmefach angeordnet sein, wobei die Bindemittelentnahme aus dem Innenbereich der Bindemittelrolle erfolgt. Der Führungsweg beschreibt den Verlauf des Bindemittelstrangs, wenn dieser bestimmungsgemäß entlang der Führungselemente verläuft.

Jede Bindenadel erstreckt sich von einer Basis zu einer Spitze, an welcher ein erstes Nadel-Führungselement angeordnet ist. Die Basis der jeweiligen Bindenadel kann an einem Träger befestigt sein, der eine Verbindung mit sämtlichen Bindenadeln herstellt. Der Träger kann zusammen mit beiderseits angeordneten Armen ein in etwa U-förmiges Schwingenjoch bilden. Am gegenüberliegenden Ende der Bindenadel ist die Spitze angeordnet, die im Zuge der Bewegung der Nadelschwinge als erstes in den Presskanal eingeführt wird. An dieser Spitze ist ein erstes Nadel-Führungselement angeordnet. Diesem kommt eine zentrale Bedeutung bei der Einführung des Bindemittelstrangs in den Presskanal zu. Insbesondere dient es dazu, einen Teil des Bindemittelstrang zu dem o.g. Endbereich des Bindemittelstrangs zu führen, damit diese miteinander verbunden werden können.

Die Nadelschwinge ist durch eine Einführbewegung aus einer ersten Position, in welcher die Bindenadeln außerhalb des Presskanals angeordnet sind, in eine zweite Position verstellbar, in welcher die Bindenadeln wenigstens teilweise in den Presskanal eingeführt sind, und ist durch eine Rückzugsbewegung in die erste Position zurück verstellbar. Durch die Wirkung des motorischen Antriebs bewegt sich die Nadelschwinge entsprechend einem Bindezyklus. Dieser Bindezyklus entspricht zum einer Einführbewegung aus einer ersten Position, die auch als Ausgangsposition bezeichnet werden kann, in eine zweite Position, die auch als Bindeposition bezeichnet werden kann, gefolgt von einer Rückzugsbewegung zurück in die Ausgangsposition. In der zweiten Position sind die Bindenadeln weitestmöglich in den Presskanal eingeführt. Die genannten Positionen entsprechen normalerweise Totpunktlagen der Nadelschwinge, z.B. einer unteren Totpunktlage und einer oberen Totpunktlage.

Weiterhin weist die Bindevorrichtung ein von der Nadelschwinge unabhängiges Zusatz-Führungselement auf, welchem das erste Nadel-Führungselement im Führungsweg nachgeordnet ist. Das Zusatz-Führungselement ist nicht an der Nadelschwinge angeordnet. Entsprechend ist es unabhängig von der Nadelschwinge direkt oder indirekt mit dem Rahmen verbunden. Auch das Zusatz-Führungselement ist auf dem Führungsweg angeordnet, wobei es von der Bindemittelrolle aus gesehen vor dem ersten Nadel-Führungselement angeordnet ist. Man kann auch sagen, es ist auf dem Führungsweg zwischen der Bindemittelrolle und dem ersten Nadel-Führungselement angeordnet. Entsprechend verläuft der Bindemittelstrang ausgehend von der Bindemittelrolle zunächst über das Zusatz-Führungselement und dann über das erste Nadel-Führungselement. Sowohl zwischen der Bindemittelrolle und dem Zusatz-Führungselement als auch zwischen Letzterem und dem ersten Nadel-Führungselement können ein oder mehrere weitere Führungselemente zwischengeordnet sein. Normalerweise erfährt der Bindemittelstrang am Zusatz-Führungselement eine wesentliche Umlenkung, die bspw. wenigstens 45° oder wenigstens 90° betragen kann. Die Umlenkung kann sich während des Bindezyklus verändern. Zumindest zeitweise kann sie wenigstens 135° betragen.

Erfindungsgemäß weist die Nadelschwinge ein zweites Nadel-Führungselement auf, welches näher an der Basis angeordnet ist als das erste Nadel-Führungselement und im Führungsweg zwischen dem Zusatz-Führungselement und dem ersten Nadel-Führungselement zwischengeordnet ist, wobei sich das zweite Nadel-Führungselement durch die Einführbewegung an das Zusatz-Führungselement annähert und durch die Rückzugsbewegung von diesem entfernt. Das zweite Nadel-Führungselement ist im Unterschied zum ersten Nadel-Führungselement von der Spitze beabstandet und näher an der Basis angeordnet. Es kann auch unmittelbar an der Basis angeordnet sein oder von der Spitze ausgesehen auf einer gegenüberliegenden Seite der Basis. Es kann mit der Bindenadel verbunden sein oder bspw. mit einem o.g. Träger oder Schwingenjoch der Nadelschwinge. Es kann beweglich an der Nadelschwinge angeordnet sein, was zum einen eine Drehbarkeit einschließt, wenn das Führungselement als Führungsrolle ausgebildet ist, aber ggf. auch eine andere Art von Beweglichkeit. In jedem Fall ist das zweite Nadel-Führungselement über die Nadelschwinge mit dem Rahmen verbunden und bewegt sich daher mit der Nadelschwinge, wenn diese verstellt wird. Im Führungsweg ist das zweite Nadel-Führungselement hinter dem Zusatz-Führungselement angeordnet, allerdings vor dem ersten Nadel-Führungselement. In einigen Ausführungsformen kann der Führungsweg vom Zusatz-Führungselement direkt zum zweiten Nadel-Führungselement verlaufen. Auch am zweiten Nadel-Führungselement kann der Bindemittelstrang eine wesentliche Umlenkung erfahren. Diese ist von der momentanen Position der Nadelschwinge abhängig. Zumindest in einigen Positionen, insbesondere in der ersten Position, kann die Umlenkung wenigstens 45°, wenigstens 90° oder wenigstens 135° betragen.

Die Bindevorrichtung ist derart eingerichtet, dass sich das zweite Nadel-Führungselement durch die Einführbewegung an das Zusatz-Führungselement annähert und durch die Rückzugsbewegung von diesem entfernt. Dies schließt die Möglichkeit ein, dass sich das zweite Nadel-Führungselement während der Einführbewegung zeitweise vom Zusatz-Führungselement entfernt, wobei insgesamt durch die Einführbewegung allerdings eine Annäherung erfolgt, d.h. der Abstand verringert sich. Auch ist es möglich, dass sich das zweite Nadel-Führungselement während der Rückzugsbewegung zeitweise an das Zusatz-Führungselement annähert, wobei insgesamt durch die Rückzugsbewegung allerdings ein Entfernen erfolgt, d.h. der Abstand vergrößert sich. Anders ausgedrückt, das zweite Nadel-Führungselement ist in der ersten Position weiter vom Zusatz-Führungselement entfernt als in der zweiten Position. Dies hat zur Konsequenz, dass der Teil des Führungswegs zwischen den beiden Führungselementen in der zweiten Position kürzer ist als in der ersten Position. Man kann auch sagen, dass in diesem Bereich durch die Einführbewegung der Nadelschwinge Bindemittel freigegeben wird. Gleichzeitig führt die Bindenadel mit dem ersten Nadel-Führungselement ein Teil des Bindemittelstrangs in den Presskanal, wofür eine zusätzliche Länge an Bindemittel benötigt wird. Diese beiden Prozesse gleichen einander wenigstens teilweise aus, d.h. die Nadelschwinge gibt sich selbst Bindemittel frei, das sie bei der Einführbewegung benötigt. Hierdurch wird bei der Einführbewegung, die typischerweise besonders schnell erfolgen muss, die Belastung der Nadelschwinge deutlich reduziert. Bei der Rückzugsbewegung vergrößert sich der Abstand zwischen dem zweiten Nadel-Führungselement und dem Zusatz-Führungselement, was dazu führt, dass die Nadelschwinge Bindemittel nachzieht. Hierbei wirkt grundsätzlich eine Gegenkraft auf die Nadelschwinge, welche allerdings hauptsächlich im Bereich des zweiten Nadel-Führungselements eingeleitet wird, also in der Nähe der Basis, so dass die Bindenadel weniger belastet wird. Unter Umständen kann die Rückzugsbewegung auch langsamer ausgeführt werden als die Einführbewegung, wodurch die Belastung weiter reduziert wird.

Gemäß einer typischen und bevorzugten Ausführungsform ist das zweite Nadel-Führungselement bezüglich einer Längsachse der Ballenpresse in der zweiten Position weiter vorne angeordnet ist als in der ersten Position und ist wenigstens in der ersten Position weiter hinten angeordnet als das Zusatz-Führungselement. Ein typischer Bewegungsablauf einer Nadelschwinge sieht vor, dass diese bezüglich der Längsachse vorwärts sowie bezüglich der Hochachse aufwärts schwingt, um das Bindemittel in den Presskanal einzuführen. Dementsprechend bewegt sich auch das zweite Nadel-Führungselement bezüglich der Längsachse insgesamt nach vorne, wenngleich selbstverständlich auch Bewegungsanteile in Richtung der Hochachse vorhanden sind. Dementsprechend kann eine Annäherung an das Zusatz-Führungselement erreicht werden, wenn dieses zumindest in der ersten Position weiter vorne angeordnet ist als das zweite Nadel-Führungselement. In der zweiten Position kann die genannte Reihenfolge bezüglich der Längsachse erhalten bleiben, jedoch können die beiden genannten Führungselemente auch bezüglich der Längsachse auf gleicher Höhe angeordnet sein oder das zweite Nadel-Führungselement kann vor dem Zusatz-Führungselement angeordnet sein.

Bevorzugt weist die Bindemittelrolle wenigstens eines Bindemittelstrangs eine Bremsvorrichtung auf, die dazu eingerichtet ist, eine Bindemittelfreigabe zu blockieren, solange eine Spannkraft im Bindemittelstrang unterhalb einer Bremslösekraft liegt.

"Bindemittelfreigabe" bezeichnet die Freigabe oder Abgabe von Bindemittel von der Bindemittelrolle. Die Spannkraft, welche auch als Bandspannung bezeichnet werden kann, wirkt entlang des gesamten Bindemittelstrangs, wobei sie allerdings nicht zwangsläufig überall im Bindemittelstrang zu jedem Zeitpunkt gleich sein muss. Im Falle einer drehbar gelagerten Bindemittelrolle kann der Spannkraft im Bindemittelstrang im Bereich der Bindemittelrolle ein Drehmoment zugeordnet werden, welches auf die Bindemittelrolle wirkt und versucht, diese in Drehung zu versetzen. Allerdings könnte ein quasi spontanes Abrollen von Bindemittel dazu führen, dass der Bindemittelstrang unkontrolliert herunterhängt und nicht mehr führbar ist. Daher ist es sinnvoll, eine Bremsvorrichtung vorzusehen, die die Bindemittelrolle blockiert, also deren Drehung verhindert. Die Bremsvorrichtung löst allerdings die Bindemittelrolle, gibt also gegen deren Drehung frei, wenn die Spannkraft im Bindemittelstrang wenigstens einer Bremslösekraft entspricht. Die Bremslösekraft ist dabei selbstverständlich auf die typischerweise sonst herrschenden Kräfte so abgestimmt, dass ein Abziehen von Bindemittel nicht übermäßig behindert wird. Auch im Falle einer kernlosen, nicht drehbar gelagerten Bindemittelrolle kann eine Bremsvorrichtung sinnvoll sein, die die Bindemittelfreigabe blockiert und so ein ungewolltes Abwickeln von Bindemittel verhindert.

Bevorzugt weist die Bindevorrichtung wenigstens ein Pufferelement auf, das wenigstens ein Puffer-Führungselement aufweist und gegenüber dem Rahmen elastisch auslenkbar ist, wodurch im Bindemittelstrang eine erste Spannkraft erzeugbar ist, die größer ist als die Bremslösekraft. Der Bindemittelstrang wird im Betriebszustand über das Puffer-Führungselement geführt. Im Bindemittelstrang herrscht allgemein eine Spannkraft, entsprechend welcher der Bindemittelstrang eine Kraft auf das Puffer-Führungselement und somit auf das Pufferelement insgesamt ausüben kann. Dieser Kraft kann eine elastische Rückstellkraft entgegenwirken, die durch ein Federelement erzeugt werden kann, mit welchem das Pufferelement verbunden ist. Es kann sich somit ein Gleichgewicht zwischen der auslenkungsabhängigen Rückstellkraft und der durch den Bindemittelstrang einwirkenden Kraft einstellen. Dabei sind das Pufferelement sowie das mit ihm verbundene Federelement so ausgebildet, dass maximal eine erste Spannkraft erzeugbar ist, die größer als die Bremslösekraft ist. Dementsprechend ist das Pufferelement zumindest bei maximaler elastische Auslenkung in der Lage, Bindemittel entgegen der Bremslösekraft von der Bindemittelrolle abzuziehen. Somit wird das Abziehen von Bindemittel zeitlich und kinematisch zumindest teilweise von der Bewegung der Nadelschwinge entkoppelt.

Grundsätzlich ist es möglich, dass ein Zusatz-Führungselement positionsfest am Rahmen angeordnet ist, was im Falle einer Führungsrolle deren Drehbarkeit gegenüber dem Rahmen einschließt. Die Funktionalität lässt sich allerdings wesentlich dadurch verbessern, dass wenigstens ein Zusatz-Führungselement durch ein Puffer-Führungselement gebildet ist. Zum einen können zwei Funktionalitäten von einem einzigen Führungselement übernommen werden, was die Konstruktion vereinfacht und das Gewicht reduziert. Allerdings ist es unter Umständen auch vorteilhaft, wenn die Nadelschwinge mit dem zweiten Nadel-Führungselement über den zwischengeordneten Abschnitt des Bindemittelstrang gewissermaßen direkt auf das Puffer-Führungselement wirkt. Auf diese Weise kann das Pufferelement zuverlässig je nach Bedarf ausgelenkt werden, ohne dass eine größere Anzahl zwischengeordneter Elemente belastet wird.

Hinsichtlich der Verstellbarkeit eines Pufferelements sind unterschiedliche Möglichkeiten gegeben. Bspw. könnte dieses linear verstellbar sein. Eine entsprechende Linearführung ist allerdings unter Umständen konstruktiv aufwendig, benötigt viel Bauraum und/oder erhöht die Gefahr einer Verschmutzung, die die Funktion des Pufferelements wesentlich beeinträchtigen kann. Bevorzugt ist daher wenigstens ein Pufferelement als Pufferschwinge ausgebildet, die gegenüber dem Rahmen um eine Puffer-Schwenkachse schwenkbar ist. Die elastische Auslenkbarkeit kann bspw. durch eine im Abstand zur Puffer-Schwenkachse ansetzende Linearfeder (z.B. eine Schraubenfeder) realisiert sein oder durch eine im Bereich der Puffer-Schwenkachse ansetzende Torsionsfeder. Die Puffer-Schwenkachse ist in aller Regel stationär am Rahmen angeordnet. Normalerweise verläuft die Puffer-Schwenkachse parallel zur Querachse der Ballenpresse. Die schwenkbare Ausbildung erfordert nur ein geeignetes Schwenklager, dessen Funktion durch Verschmutzung, z.B. Ansammlung von Erntegut, kaum beeinträchtigt werden kann.

Grundsätzlich kann für jeden Bindemittelstrang jeweils ein eigenes Pufferelement vorgesehen sein. Dies kann unter Umständen für die optimale Führung des einzelnen Bindemittelstrang optimal sein und ermöglicht insbesondere auch ein Erkennen eines Abreißens im einzelnen Bindemittelstrang, da dies unmittelbar zu einer unerwarteten Auslenkung des zugeordneten Pufferelements führt, welche durch Sensoren festgestellt werden kann. Andererseits ist diese Lösung konstruktiv aufwendig und teilweise hinsichtlich des zur Verfügung stehenden Bauraums schwer realisierbar. Letzteres betrifft insbesondere die Anordnung der einzelnen Puffer-Schwenkachsen. Eine andere Ausgestaltung sieht daher vor, dass wenigstens ein Pufferelement eine Mehrzahl von Puffer-Führungselementen für eine Mehrzahl von Bindemittelsträngen aufweist. Insbesondere kann ein einziges Pufferelement eine Mehrzahl von Puffer-Führungselementen aufweisen, von denen jeweils eines jedem der Bindemittelstränge zugeordnet ist. D.h., die Anzahl der Puffer-Führungselemente am Pufferelement entspricht der Anzahl der Bindemittelstränge.

Bevorzugt weist die Bindevorrichtung wenigstens ein Strafferelement auf, das wenigstens ein Straffer-Führungselement aufweist und elastisch auslenkbar ist, wodurch im Bindemittelstrang eine zweite Spannkraft erzeugbar ist, die kleiner ist als die Bremslösekraft. Der Bindemittelstrang wird im Betriebszustand über das Straffer-Führungselement geführt. Korrespondierend mit der aktuell im Bindemittelstrang herrschenden Spannkraft, kann der Bindemittelstrang eine Kraft auf das Straffer-Führungselement und somit auf das Strafferelement insgesamt ausüben. Dieser Kraft kann eine elastische Rückstellkraft entgegenwirken, die durch ein Federelement erzeugt werden kann, mit welchem das Strafferelement verbunden ist. Es kann sich somit ein Gleichgewicht zwischen der auslenkungsabhängigen Rückstellkraft und der durch den Bindemittelstrang einwirkenden Kraft einstellen. Dabei ist das Strafferelement, das heißt das mit ihm verbundene Federelement, so ausgebildet, dass maximal eine zweite Spannkraft erzeugbar ist, die in jedem Fall kleiner als die Bremslösekraft ist. Dementsprechend ist das Strafferelement selbst bei maximaler zweiter Spannkraft nicht in der Lage, Bindemittel entgegen der Bremslösekraft vom der Bindemittelrolle abzuziehen. Allerdings kann durch die elastische Rückstellung des Strafferelements der Bindemittelstrang gestrafft werden oder straff gehalten werden, so dass verhindert werden kann, dass er sich bspw. ungewollt von Führungselementen löst. Auf diese Weise lässt sich auch kompensieren, dass bei einem Abziehen von Bindemittel von der Bindemittelrolle die Bindemittelrolle trägheitsbedingt etwas nachläuft, selbst wenn kein weiterer Zug mehr auf den Bindemittelstrang ausgeübt wird. Dementsprechend kann die Bremslösekraft geringer eingestellt werden, was wiederum andere Komponenten des Systems entlastet.

Wie bereits oben erwähnt, kann wenigstens ein Zusatz-Führungselement insbesondere durch ein Puffer-Führungselement gebildet sein. Es ist allerdings auch denkbar, dass wenigstens ein Zusatz-Führungselement durch ein Straffer-Führungselement gebildet ist. Soweit in diesem Fall zusätzlich ein Pufferelement mit einem Puffer-Führungselement vorgesehen ist, ist dieses im Führungsweg vor dem Zusatz-Führungselement angeordnet.

Eine Ausführungsform sieht vor, dass wenigstens ein Strafferelement unabhängig von der Nadelschwinge verstellbar mit dem Rahmen verbunden ist. D.h., Nadelschwinge und das Strafferelement sind unabhängig voneinander mit dem Rahmen verbunden. Dementsprechend werden das Gewicht sowie sämtliche auf das Strafferelement wirkenden Kräfte vom Rahmen aufgenommen. Bei dieser Ausführungsform ist das Straffer-Führungselement auf dem Führungsweg zwischen der Bindemittelrolle und dem zweiten Nadel-Führungselement zwischengeordnet.

Normalerweise alternativ zu der o.g. Ausführungsform, kann gemäß einer weiteren Ausführungsform wenigstens ein Strafferelement verstellbar mit der Nadelschwinge verbunden sein. Das Strafferelement ist also nur indirekt über die Nadelschwinge mit dem Rahmen verbunden. Ein elastisches Rückstellelement wirkt hierbei zwischen dem Strafferelement und der Nadelschwinge. Es ist insbesondere bevorzugt, dass das Straffer-Führungselement das zweite Nadel-Führungselement bildet. Somit wird insgesamt ein Führungselement eingespart, wodurch sich der Aufbau vereinfacht und das Gewicht der Ballenpresse insgesamt reduziert werden kann. Andererseits ist bei einer Verbindung mit dem Rahmen vorteilhaft, dass die Nadelschwinge nicht durch das Gewicht oder die Masse des Strafferelements belastet wird.

Ein Strafferelement kann in unterschiedlicher Weise verstellbar sein, beispielsweise linear. Eine entsprechende Linearführung ist kann aus den oben mit Bezug auf das Pufferelement erläuterten Gründen problematisch sein. Bevorzugt ist daher wenigstens ein Strafferelement um eine Straffer-Schwenkachse schwenkbar. In diesem Fall kann das Strafferelement auch als Strafferarm, Strafferhebel, Strafferschwinge oder dergleichen bezeichnet werden. Die elastische Auslenkbarkeit kann bspw. durch eine im Abstand zur Straffer-Schwenkachse ansetzende Linearfeder (z.B. eine Schraubenfeder) realisiert sein oder durch eine im Bereich der Straffer-Schwenkachse ansetzende Torsionsfeder. Die Straffer-Schwenkachse kann dabei je nach Ausführungsform stationär am Rahmen oder stationär an der Nadelschwinge angeordnet sein. Wie die anderen o.g. Schwenkachsen verläuft die Straffer-Schwenkachse normalerweise parallel zur Querachse der Ballenpresse.

Es wäre möglich, dass die Bindevorrichtung genau ein Strafferelement aufweist, das mit sämtlichen Bindemittelsträngen zusammenwirkt. Dies stellt eine konstruktiv einfache Lösung dar. Allerdings lässt sich durch diese Ausgestaltung normalerweise keine vollständige Spannung sämtlicher Bindemittelstränge erreichen. Vielmehr werden der oder die Bindemittelstränge mit der geringsten Länge straff gespannt, während bei den anderen keine vollständige Straffung zu erreichen ist. Es ist daher bevorzugt, dass die Bindevorrichtung eine Mehrzahl von Strafferelementen aufweist, die unterschiedlichen Bindemittelsträngen zugeordnet sind. Dabei sind die Strafferelemente normalerweise vollständig unabhängig voneinander auslenkbar. Es wäre auch hierbei möglich, dass ein Strafferelement einer Mehrzahl von Bindemittelsträngen zugeordnet ist, so dass die Bindemittelstränge gewissermaßen gruppenweise gespannt werden. Allerdings werden auch in diesem Fall normalerweise nicht alle Bindemittelstränge zu jedem Zeitpunkt gespannt gehalten. Dies lässt sich in einer weiteren bevorzugten Ausgestaltung realisieren, wenn jedem Bindemittelstrang wenigstens ein Strafferelement eindeutig zugeordnet ist. D.h. das entsprechende Strafferelement ist umgekehrt nur diesem Bindemittelstrang zugeordnet. Entsprechend kann in jedem Bindemittelstrang eine optimale Spannung aufrechterhalten werden.

Bevorzugt ist wenigstens ein Straffer-Anschlagelement dazu eingerichtet, mit einem Strafferelement zusammenzuwirken, um eine Endposition desselben zu definieren. Generell beschränkt ein solches Straffer-Anschlagelement die Bewegung des Strafferelements in wenigstens einer Richtung. In dieser Richtung kann sich das Strafferelement nur bis zur Endposition bewegen. Normalerweise ist für jedes Strafferelement wenigstens ein erstes Straffer-Anschlagelement vorgesehen, das die Bewegung des Strafferelements entgegen der Rückstellrichtung begrenzt. Durch dieses wird vor allem verhindert, dass das Strafferelement zu weit ausgelenkt wird, wenn eine größere Spannkraft im Bindemittelstrang herrscht. Zusätzlich oder alternativ kann ein zweites Straffer-Anschlagelement vorgesehen sein, das die Bewegung des Strafferelements in Rückstellrichtung begrenzt. Dieses kann z.B. verhindern, dass das Strafferelement bei einem Abreißen des Bindemittelstrangs in eine Position bewegt, in welcher es für ein erneutes Einfädeln des Bindemittelstrangs schlecht erreichbar ist. Sowohl das erste als auch das zweite Straffer-Anschlagelement sind normalerweise stationär am Rahmen angeordnet.

Ebenso ist es bevorzugt, dass wenigstens ein Puffer-Anschlagelement dazu eingerichtet ist, mit einem Pufferelement zusammenzuwirken, um eine Endposition desselben zu definieren. Ein solches Straffer-Anschlagelement die Bewegung des Strafferelements in wenigstens einer Richtung, so dass sich das Strafferelement in dieser Richtung nur bis zur Endposition bewegen kann. Normalerweise ist für jedes Pufferelement wenigstens ein erstes Puffer-Anschlagelement vorgesehen, das die Bewegung des Pufferelements in Rückstellrichtung begrenzt. Durch dieses wird vor allem verhindert, dass das Pufferelement zu viel Bindemittel von der Bindemittelrolle abzieht, und das notwendige Vorspannen des Rückstellelements ist ohne Kollision mit angrenzenden Bauteilen möglich. Zusätzlich oder alternativ kann ein zweites Puffer-Anschlagelement vorgesehen sein, das die Bewegung des Pufferelements entgegen der Rückstellrichtung begrenzt. Dieses kann u.a. die Funktion haben, eine Kollision zwischen dem Pufferelement und der Nadelschwinge zu verhindern. Sowohl das erste als auch das zweite Puffer-Anschlagelement sind normalerweise stationär am Rahmen angeordnet.

Gemäß einer Ausgestaltung ist wenigstens ein Puffer-Anschlagelement an der Nadelschwinge angeordnet. Das entsprechende Puffer-Anschlagelement ist normalerweise starr an der Nadelschwinge befestigt und bewegt sich mit dieser mit. Es ist normalerweise zumindest benachbart zur Basis einer Bindenadel angeordnet und/oder an einem Träger oder Schwingenjoch, an welchem die Bindenadeln befestigt sind. Dabei ist es möglich, dass das Pufferelement nur dann mit dem genannten Puffer-Anschlagelement zusammenwirken kann, wenn die Nadelschwinge in einer bestimmten Position angeordnet ist, z.B. in der ersten Position. Wird die Nadelschwinge aus dieser Position herausbewegt, gibt das Puffer-Anschlagelement das Pufferelement frei, was dazu führen kann, dass ein Teil des Bindemittelstrangs freigegeben wird und sich die Spannkraft im Bindemittelstrang verringert. Normalerweise ist zusätzlich ein stationär am Rahmen angeordnetes Puffer-Anschlagelement vorgesehen, das die Bewegung des Pufferelements begrenzt, wenn das o.g. Puffer-Anschlagelement mit der Nadelschwinge fortbewegt wurde.

Die Aufgabe wird zudem gelöst mit einer Ballenpresse mit einer solchen Bindevorrichtung. Die Bindevorrichtung weist eine gegenüber einem Rahmen der Ballenpresse verstellbare Nadelschwinge mit einer Mehrzahl von Bindenadeln zum Zuführen jeweils eines Bindemittelstrangs in einen Presskanal auf, wobei die Bindevorrichtung mit einer Mehrzahl von Führungselementen für jeden Bindemittelstrang einen von einer Bindemittelrolle ausgehenden Führungsweg definiert, wobei jede Bindenadel sich von einer Basis zu einer Spitze erstreckt, an welcher ein erstes Nadel-Führungselement angeordnet ist, und wobei die Nadelschwinge durch eine Einführbewegung aus einer ersten Position, in welcher die Bindenadeln außerhalb des Presskanals angeordnet sind, in eine zweite Position verstellbar ist, in welcher die Bindenadeln wenigstens teilweise in den Presskanal eingeführt sind, und durch eine Rückzugsbewegung in die erste Position zurück verstellbar ist, sowie weiterhin aufweisend ein von der Nadelschwinge unabhängiges Zusatz-Führungselement, welchem das erste Nadel-Führungselement im Führungsweg nachgeordnet ist.

Erfindungsgemäß weist die Nadelschwinge ein zweites Nadel-Führungselement auf, welches näher an der Basis angeordnet ist als das erste Nadel-Führungselement und im Führungsweg zwischen dem Zusatz-Führungselement und dem ersten Nadel-Führungselement zwischengeordnet ist, wobei sich das zweite Nadel-Führungselement durch die Einführbewegung an das Zusatz-Führungselement annähert und durch die Rückzugsbewegung von diesem entfernt.

Die genannten Begriffe wurden bereits oben mit Bezug auf die erfindungsgemäße Bindevorrichtung erläutert und werden daher nicht nochmals erklärt. Vorteilhafte Ausgestaltungen der erfindungsgemäßen Ballenpresse entsprechen denen der erfindungsgemäßen Bindevorrichtung.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine perspektivische Darstellung eines Teils einer erfindungsgemäßen Ballenpresse gemäß einer ersten Ausführungsform;
- Fig. 2-6: Seitenansichten einer Bindevorrichtung der Ballenpresse aus Fig.1 in verschiedenen Zuständen; sowie
- Fig. 7: eine Seitenansicht einer Bindevorrichtung gemäß einer zweiten Ausführungsform.

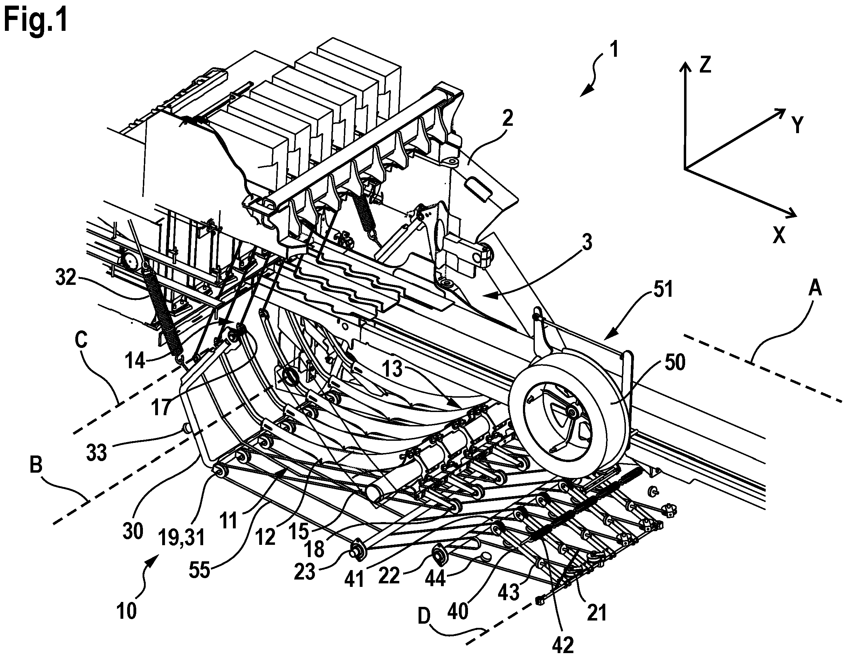

Fig. 1 zeigt eine perspektivische Darstellung von Teilen einer erfindungsgemäßen Ballenpresse 1, genauer gesagt einer Quaderballenpresse. Verschiedene Komponenten, die zum Verständnis der Erfindung nicht relevant sind, wurden weggelassen, z.B. ein Fahrwerk sowie eine Deichsel, mittels welcher die Ballenpresse 1 an ein Zugfahrzeug koppelbar ist. Die Erfindung ist ausdrücklich nicht auf gezogene oder getragene Ballenpressen beschränkt, sondern bezieht sich auch auf selbstfahrende Ballenpressen. Die Ballenpresse 1 weist einen Rahmen 2 auf. Innerhalb des Rahmens 2 ist ein Presskanal 3 definiert, der sich entlang einer Kanallängsachse A erstreckt. Die seitliche sowie obere Verkleidung des Presskanals 3 ist in der Figur teilweise weggelassen. Innerhalb des Presskanals 3 wird ein Quaderballen 60 sukzessive aus Portionen von Erntegut aufgebaut, welche in einer hier nicht sichtbaren Sammelkammer vorverdichtet wurden. Wenn der Quaderballen 60 seine vorbestimmte Größe erreicht hat, wird er mittels eines Bindemittels, in diesem Beispiel mittels eines thermoplastischen Bandes, zusammengebunden. Dabei werden insgesamt sechs Schleifen 57 aus Bindemittel, die bezüglich einer Querachse Y quer zur Kanallängsachse A voneinander beabstandet sind, um den Quaderballen 60 gelegt. Zur Bildung der jeweiligen Schleife 57 wird ein Endbereich 56 eines Bindemittelstrangs 55, welcher an einem Ende des Quaderballens 60 an dessen Oberseite festgehalten wird, mit einem Abschnitt des Bindemittelstrangs 55 verbunden, der zu diesem Zweck von unten in den Presskanal 3 geführt wird. Bei einem thermoplastischen Band erfolgt das Verbinden durch Verschweißen. Alternativ könnte auch ein Garn als Bindemittel genutzt werden, bei welchem das Verbinden durch Verknoten erfolgt.

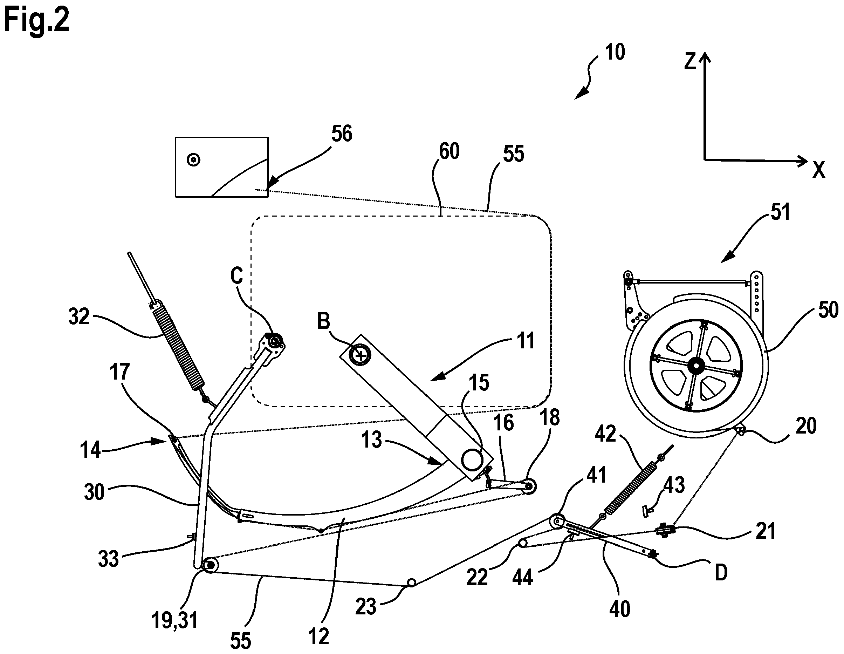

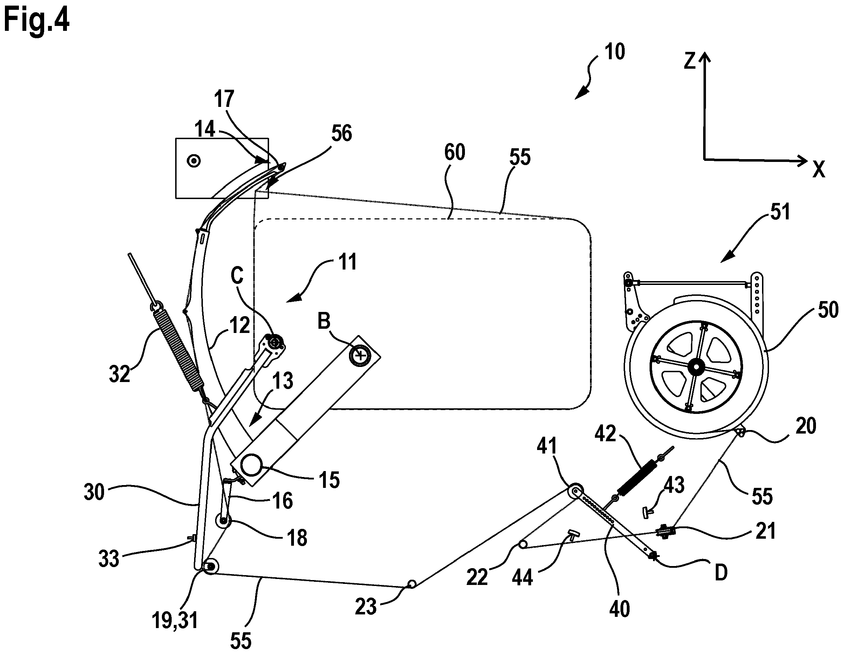

Dies geschieht mittels sechs Bindenadeln 12, die Teil einer Nadelschwinge 11 sind. Die Nadelschwinge 11 wiederum ist Teil einer erfindungsgemäßen Bindevorrichtung 10. Die Nadelschwinge 11 weist ein Schwingenjoch 15 auf, an dem die Bindenadeln 12 befestigt sind, und der um eine Schwingen-Schwenkachse B schwenkbar mit dem Rahmen 2 der Ballenpresse 1 verbunden ist. Die Nadelschwinge 11 ist in hier nicht dargestellter Weise an einen motorischen Antrieb koppelbar, wodurch sie zwischen einer ersten Position, die in Fig. 1 und 2 dargestellt ist, und einer zweiten Position, die in Fig. 4 dargestellt ist, geschwenkt werden kann. Jede Bindenadel 12 erstreckt sich von einer Basis 13 am Schwingenjoch 15 zu einer Spitze 14. Dort weist jede Bindenadel 12 eine Führungsrolle auf, die ein erstes Nadel-Führungselement 17 bildet. Außerdem ist jeder Bindenadel 12 ein ebenfalls als Führungsrolle ausgebildetes zweites Nadel-Führungselement 18 zugeordnet, das an einem starr mit dem Schwingenjoch 15 verbundenen Ausleger 16 angeordnet ist. Bezüglich einer zum Heck der Ballenpresse weisenden Längsachse X vor jedem zweiten Nadel-Führungselement 18 ist jeweils ein Puffer-Führungselement 31 angeordnet, das als ein Zusatz-Führungselement 19 fungiert. Auch dieses ist wiederum als drehbare Führungsrolle ausgebildet. Sämtliche Puffer-Führungselemente 31 sind an einer einzigen Pufferschwinge 30 angeordnet, die um eine Puffer-Schwenkachse C schwenkbar mit dem Rahmen 2 verbunden ist. Die Pufferschwinge 30 ist über Puffer-Federelemente 32, die hier als Schraubenfedern ausgebildet sind, mit dem Rahmen 2 verbunden. Sie spannen die Pufferschwinge 30 in Richtung auf ein erstes Puffer-Anschlagelement 33 vor.

Des Weiteren ist für jeden Bindemittelstrang 55 ein Strafferelement 40 vorgesehen, dass um eine Straffer-Schwenkachse D schwenkbar mit dem Rahmen verbunden ist. Die Strafferelemente 40 sind hier als Schwenkarme ausgebildet. Sie sind über Straffer-Federelemente 42, die wiederum als Schraubenfedern ausgebildet sind, mit dem Rahmen 2 verbunden, so dass sie in Richtung jeweils eines ersten Straffer-Anschlagselements 43 vorgespannt sind. Während das erste Straffer-Anschlagelement 43 die Bewegung des Strafferelements 40 in einer Richtung einschränkt, ist diese in entgegengesetzter Richtung durch ein zweites Straffer-Anschlagelement 44 begrenzt. Die genannten Anschlagelemente 33, 43, 44 sind jeweils starr am Rahmen 2 befestigt. An einem der Straffer-Schwenkachse D gegenüberliegenden Ende weist das jeweilige Strafferelement 40 ein wiederum als Führungsrolle ausgebildetes Straffer-Führungselement 42 auf.

Jeder Bindemittelstrang 55 ist teilweise auf einer Bindemittelrolle 50 aufgerollt, die einen Bindemittelvorrat bildet. Die Bindemittelrolle 50 ist drehbar am Rahmen 2 gelagert. Eine Bremsvorrichtung 51 verhindert eine Drehung der Bindemittelrolle 50 und somit ein Abziehen von Bindemittel, solange eine Spannkraft im Bindemittelstrang 55 unterhalb einer Bremslösekraft liegt. Wenn ein Garn als Bindemittel verwendet wird, ist die Bindemittelrolle in der Regel kernlos ausgebildet und nicht drehbar gelagert. Auch in diesem Fall kann eine geeignete Bremsvorrichtung vorgesehen sein, die eine Bindemittelfreigabe bis zum Erreichen einer Bremslösekraft blockiert. Von der Bindemittelrolle 50 aus wird der Bindemittelstrang 55 entlang eines Führungswegs geführt, der durch eine Mehrzahl von Führungselementen definiert ist. Über ein Lösehebel-Führungselement 20, welches mit einem Lösehebel (ohne Bezugszeichen) der Bremsvorrichtung 51 verbunden ist, sowie ein erstes und zweites Rahmen-Führungselement 21, -22, welche jeweils positionsfest am Rahmen 2 angeordnet sind, verläuft der Führungsweg weiter zum Straffer-Führungselement 41 und von dort über ein drittes Rahmen-Führungselement 23 zum Puffer-Führungselement 31. Von dort führt der Führungsweg direkt zum zweiten Nadel-Führungselement 18 und über zwischengeordnete Führungselemente (ohne Bezugszeichen) entlang der Bindenadel zum ersten Nadel-Führungselement 17. Der Bindemittelstrang 55 folgt dem Führungsweg, wobei er - bezogen auf eine in Fig. 1 und 2 gezeigte erste Position - am zweiten Rahmen-Führungselement 22, am Straffer-Führungselement 41, am Puffer-Führungselement 31 sowie an den Nadel-Führungselementen 17, 18 jeweils eine deutliche Umlenkung von über 90° erfährt. In dem in Fig. 1 und 2 gezeigten Zustand ist die Pufferschwinge 30 in Kontakt mit dem ersten Puffer-Anschlagelement 33, während die Strafferelemente 40 in Kontakt mit den zweiten Straffer-Anschlagelementen 44 sind.

Der Bindemittelstrang 55 ist, wie in Fig. 2 angedeutet, um den hier nicht dargestellten Quaderballen 60 herumgeführt, wobei der Endbereich 56 des Bindemittelstrangs 55 für den nachfolgenden Bindevorgang festgehalten wird. Der Bindevorgang erfordert das Eintauchen der Spitze 14 der Bindenadel 12 in den Presskanal 3, so dass ein Abschnitt des Bindemittelstrangs 55 mit dem Endbereich 56 zusammengeführt werden kann. Daher wird die Nadelschwinge 11 entsprechend einer Einführbewegung in Drehung um die Schwingen-Schwenkachse B versetzt, bezogen auf Fig. 2 - 6 ist dies eine Drehung im Uhrzeigersinn.

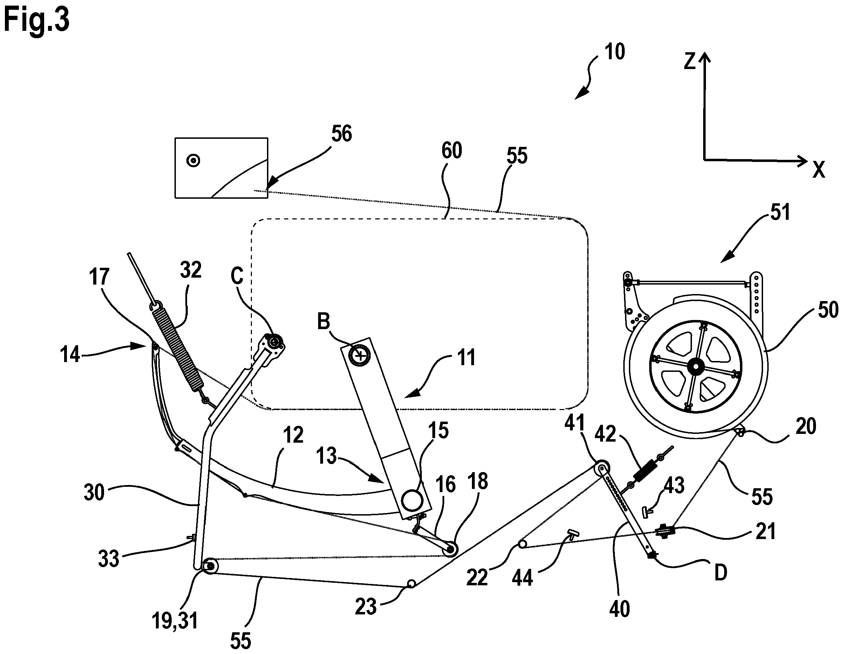

Fig. 3 zeigt eine Zwischenposition während der Einführbewegung. Entsprechend der Schwenkbewegung der Nadelschwinge 11 hat sich das zweite Nadel-Führungselement 18 dem Puffer-Führungselement 31 angenähert, wodurch in diesem Bereich eine Freigabe eines Teils des Bindemittelstrangs 55 erfolgt. Gleichzeitig wird über das erste Nadel-Führungselement 17 an der Spitze 14 Bindemittel zur Umwicklung des Quaderballens 60 abgezogen. Die beiden Effekte gleichen sich teilweise aus, wobei kein Bindemittel von der Bindemittelrolle 50 abgezogen werden muss, sondern wird trotz der Umwicklung des Quaderballens 60 etwas Bindemittel frei wird. Dies führt allerdings nicht zu einem Erschlaffen des Bindemittelstrangs 55, da das Strafferelement 40 durch das Straffer-Federelement 42 in Richtung auf das erste Straffer-Anschlagelement 43 zurückgezogen wird und somit eine ausreichende Spannkraft im Bindemittelstrang 55 aufrechterhält. Diese Spannkraft ist allerdings in jedem Fall geringer als die Bremslösekraft der Bremsvorrichtung 51. Im Zuge der Einführbewegung kann die Bindenadel 12 zwischenzeitlich auch Bindemittel nachziehen, was durch eine Auslenkung des Strafferelements 40 in Richtung auf das zweite Straffer-Anschlagelement 44 kompensiert wird. Schließlich erreicht die Nadelschwinge 11 die in Fig. 4 gezeigte zweite Position, die auch als Bindeposition bezeichnet werden kann und einer oberen Totpunktlage entspricht. Nach wie vor ist die Pufferschwinge 30 in Kontakt mit dem ersten Puffer-Anschlagelement 33. Das zweite Nadel-Führungselement 18 hat seine größte Annäherung an das Puffer-Führungselement 31 erreicht und befindet sich bezüglich der Längsachse X nahezu auf gleicher Höhe und entlang einer Hochachse Z oberhalb.

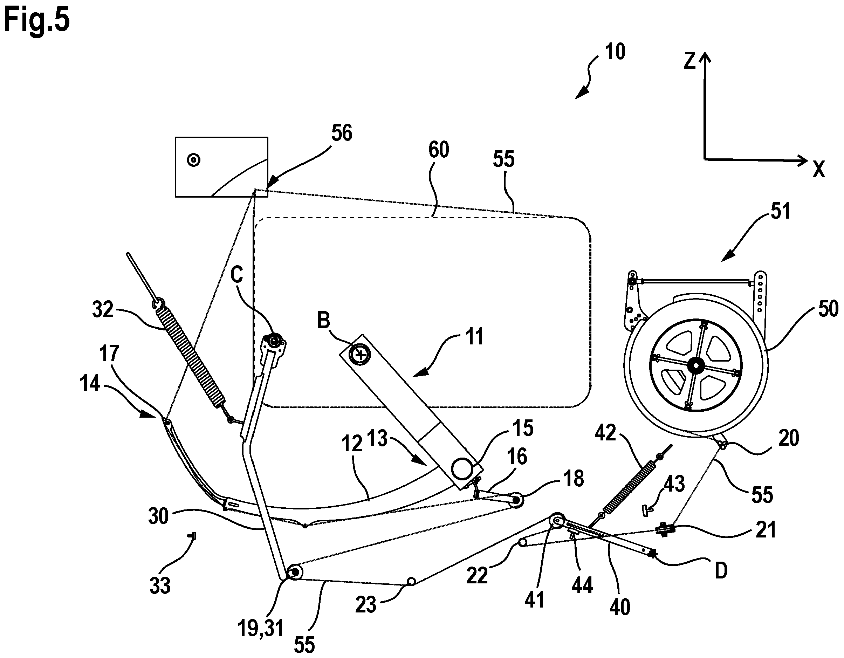

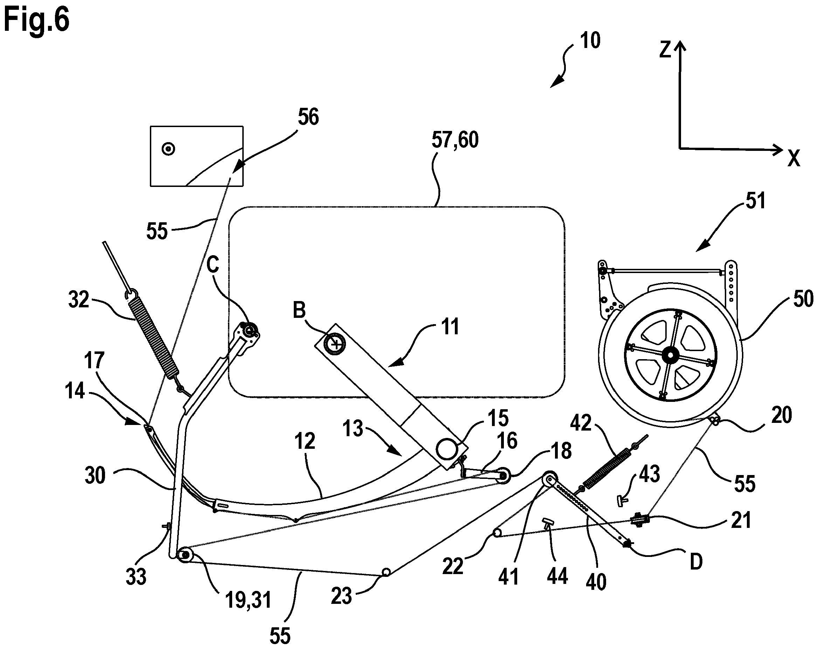

Der Bindevorgang kann nun abgeschlossen werden, wobei die Details desselben hier nicht diskutiert werden. Anschließend wird die Nadelschwinge 11 entsprechend einer Rückzugsbewegung zurück in die erste Position geführt, wie in Fig. 5 dargestellt. Bei dieser Rückzugsbewegung, die bezogen auf Fig. 2 - 6 einer Drehung im Gegenuhrzeigersinn entspricht, zieht die Nadelschwinge 11 nunmehr Bindemittel nach und übt somit eine Zugkraft auf den Bindemittelstrang 55 aus. Die hierbei wirkende Gegenkraft auf die Nadelschwinge 11 wird hauptsächlich über das zweite Nadel-Führungselement 18 und den zugehörigen Ausleger 16 am Schwingenjoch 15 aufgenommen, da der Bindemittelstrang 55 dort eine wesentlich größere Umlenkung erfährt als im Bereich der Spitze 14 mit dem ersten Nadel-Führungselement 17. Einerseits aufgrund des Wirkens der Bremsvorrichtung 51, aber vor allem aufgrund der Trägheit der Bindemittelrolle 50, wird zunächst keine oder nur wenig Bindemittel von der Bindemittelrolle 50 abgezogen. Stattdessen erfolgt eine Auslenkung der Pufferschwinge 30, und zwar zusätzlich zu einer Auslenkung des Strafferelements 40 bis zum zweiten Straffer-Anschlagelement 44. Die nunmehr im Bindemittelstrang 55 erzeugte Spannkraft übersteigt die Bremslösekraft und führt dazu, dass sich die Bindemittelrolle 50 dreht. Wenn die Nadelschwinge 11, wie in Fig. 5 dargestellt, wieder die erste Position erreicht hat, kann die Pufferschwinge 30 entsprechend der Rückstellkraft des Puffer-Federelements 32 wieder in Richtung auf das erste Puffer-Anschlagelement 33 zurückschwenken. Dabei zieht sie weiterhin Bindemittel von der Bindemittelrolle 50 ab. Schließlich erreicht die Pufferschwinge 30 ihre Ausgangslage am ersten Puffer-Anschlagelement 33. Hierdurch sinkt zwar die Spannkraft im Bindemittelstrang 55, allerdings dreht sich die Bindemittelrolle 50 aufgrund ihrer Trägheit noch ein Stück weiter, was zu einem Erschlaffen des Bindemittelstrangs 55 führen könnte. Dies wird allerdings dadurch verhindert, dass das Strafferelement 40 durch das Straffer-Federelement 42 ausgelenkt wird, wodurch eine Spannkraft aufrechterhalten wird, welche allerdings kleiner ist als die Bremslösekraft. Dieser Zustand ist in Fig. 6 dargestellt.

Es beginnt nun eine neue Ballenbildung, wobei die Nadelschwinge 11 in der ersten Position verbleibt, allerdings durch den anwachsenden Quaderballen 60 ein zunehmender Bedarf an Bindemittel besteht. Dies wird zunächst durch Auslenkung des Strafferelements 40 sowie durch Auslenkung der Pufferschwinge 30 bereitgestellt. Wenn die Auslenkung der Pufferschwinge 30 eine Spannkraft erzeugt, die die Bremslösekraft übersteigt, beginnt sich die Bindemittelrolle 50 wieder zu drehen. Die Bewegungsrichtung und Position der Pufferschwinge 30 ebenso wie der Bewegungszustand der Bindemittelrolle 50 können während der Ballenbildung mehrmals wechseln, wobei auftretende Längenunterschiede im Bindemittelstrang 55 jeweils durch das Strafferelement 30 ausgeglichen werden.

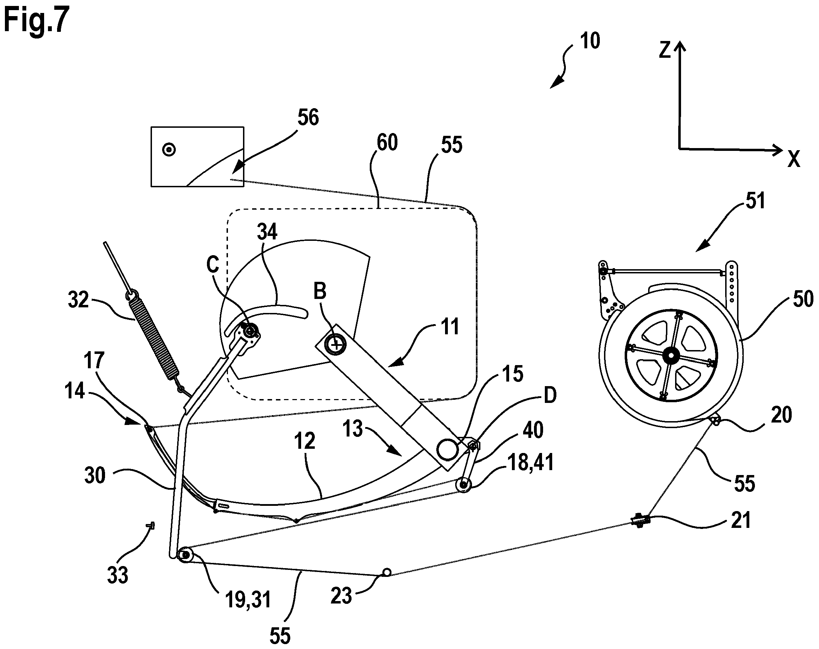

Fig. 7 zeigt eine zweite Ausführungsform einer Bindevorrichtung 10, die weitgehend mit der ersten Ausführungsform übereinstimmt und insoweit nicht nochmals erläutert wird. Bei dieser Ausführungsform ist allerdings zum einen ein zweites Puffer-Anschlagelement 34 vorgesehen, welches nicht am Rahmen 2, sondern an der Nadelschwinge 11 angeordnet ist. Fig. 7 zeigt die Nadelschwinge 11 in der ersten Position, in welcher das zweite Puffer-Anschlagelement 34 die Pufferschwinge 30 zurückhält. Wenn sich die Nadelschwinge 11 aus der ersten Position herausbewegt, gibt das zweite Puffer-Anschlagelement 34 die Pufferschwinge 30 frei, so dass diese durch das Puffer-Federelement 32 zum ersten Puffer-Anschlagelement 33 zurückgezogen wird. Außerdem sind bei dieser Ausgestaltung die Strafferelemente 40 nicht am Rahmen angeordnet, sondern an der Nadelschwinge 11. Das Straffer-Führungselement 41 fungiert gleichzeitig als zweites Nadel-Führungselement 18. Somit kann die Anzahl der Bauteile reduziert werden und das Gesamtgewicht der Ballenpresse 1 verringert sich. Andererseits hat die in Fig. 1 bis 6 dargestellte erste Ausführungsform den Vorteil, dass die Nadelschwinge 12 nicht durch das zusätzliche Gewicht oder die zusätzliche Masse der Strafferelemente 30 belastet wird.

## Patentansprüche

1. Bindevorrichtung (10) für eine Ballenpresse (1), aufweisend eine gegenüber einem Rahmen (2) der Ballenpresse (1) verstellbare Nadelschwinge (11) mit einer Mehrzahl von Bindenadeln (12) zum Zuführen jeweils eines Bindemittelstrangs (55) in einen Presskanal (3), wobei die Bindevorrichtung (10) mit einer Mehrzahl von Führungselementen (17-19, 20-23, 31, 41) für jeden Bindemittelstrang (55) einen von einer Bindemittelrolle (50) ausgehenden Führungsweg definiert, wobei jede Bindenadel (12) sich von einer Basis (13) zu einer Spitze (14) erstreckt, an welcher ein erstes Nadel-Führungselement (17) angeordnet ist, und wobei die Nadelschwinge (11) durch eine Einführbewegung aus einer ersten Position, in welcher die Bindenadeln (12) außerhalb des Presskanals (3) angeordnet sind, in eine zweite Position verstellbar ist, in welcher die Bindenadeln (12) wenigstens teilweise in den Presskanal (3) eingeführt sind, und durch eine Rückzugsbewegung in die erste Position zurück verstellbar ist, sowie weiterhin aufweisend ein von der Nadelschwinge (11) unabhängiges Zusatz-Führungselement (19), welchem das erste Nadel-Führungselement (17) im Führungsweg nachgeordnet ist,
**dadurch gekennzeichnet, dass**
die Nadelschwinge (11) ein zweites Nadel-Führungselement (18) aufweist, welches näher an der Basis (13) angeordnet ist als das erste Nadel-Führungselement (17) und im Führungsweg zwischen dem Zusatz-Führungselement (19) und dem ersten Nadel-Führungselement (17) zwischengeordnet ist, wobei sich das zweite Nadel-Führungselement (18) durch die Einführbewegung an das Zusatz-Führungselement (19) annähert und durch die Rückzugsbewegung von diesem entfernt.

2. Bindevorrichtung nach Anspruch 1, **dadurch gekennzeichnet, dass** das zweite Nadel-Führungselement (18) bezüglich einer Längsachse (Y) in der zweiten Position weiter vorne angeordnet ist als in der ersten Position und wenigstens in der ersten Position weiter hinten angeordnet ist als das Zusatz-Führungselement (19).

3. Bindevorrichtung nach einem der vorherigen Ansprüche, **dadurch gekennzeichnet, dass** die Bindemittelrolle (50) wenigstens eines Bindemittelstrangs (55) eine Bremsvorrichtung (51) aufweist, die dazu eingerichtet ist, eine Bindemittelfreigabe zu blockieren, solange eine Spannkraft im Bindemittelstrang (55) unterhalb einer Bremslösekraft liegt.

4. Bindevorrichtung nach einem der vorherigen Ansprüche, **dadurch gekennzeichnet, dass** diese wenigstens ein Pufferelement (30) aufweist, das wenigstens ein Puffer-Führungselement (31) aufweist und gegenüber dem Rahmen (2) elastisch auslenkbar ist, wodurch im Bindemittelstrang (55) eine erste Spannkraft erzeugbar ist, die größer ist als die Bremslösekraft.

5. Bindevorrichtung nach einem der vorherigen Ansprüche, **dadurch gekennzeichnet, dass** wenigstens ein Zusatz-Führungselement (19) durch ein Puffer-Führungselement (31) gebildet ist.

6. Bindevorrichtung nach einem der vorherigen Ansprüche, **dadurch gekennzeichnet, dass** wenigstens ein Pufferelement (30) als Pufferschwinge ausgebildet ist, die gegenüber dem Rahmen (2) um eine Puffer-Schwenkachse (C) schwenkbar ist.

7. Bindevorrichtung nach einem der vorherigen Ansprüche, **dadurch gekennzeichnet, dass** wenigstens ein Pufferelement (30) eine Mehrzahl von Puffer-Führungselementen (31) für eine Mehrzahl von Bindemittelsträngen (55) aufweist.

8. Bindevorrichtung nach einem der vorherigen Ansprüche, **dadurch gekennzeichnet, dass** diese wenigstens ein Strafferelement (40) aufweist, das wenigstens ein Straffer-Führungselement (41) aufweist und elastisch auslenkbar ist, wodurch im Bindemittelstrang (55) eine zweite Spannkraft erzeugbar ist, die kleiner ist als die Bremslösekraft.

9. Bindevorrichtung nach einem der vorherigen Ansprüche, **dadurch gekennzeichnet, dass** wenigstens ein Strafferelement (40) unabhängig von der Nadelschwinge (11) verstellbar mit dem Rahmen (2) verbunden ist.

10. Bindevorrichtung nach einem der vorherigen Ansprüche, **dadurch gekennzeichnet, dass** wenigstens ein Strafferelement (40) verstellbar mit der Nadelschwinge (11) verbunden ist.

11. Bindevorrichtung nach einem der vorherigen Ansprüche, **dadurch gekennzeichnet, dass** wenigstens ein Strafferelement (40) um eine Straffer-Schwenkachse (D) schwenkbar ist.

12. Bindevorrichtung nach einem der vorherigen Ansprüche, **dadurch gekennzeichnet, dass** diese eine Mehrzahl von Strafferelementen (40) aufweist, die unterschiedlichen Bindemittelsträngen (55) zugeordnet sind.

13. Bindevorrichtung nach einem der vorherigen Ansprüche, **dadurch gekennzeichnet, dass** wenigstens ein Straffer-Anschlagelement (43, 44) dazu eingerichtet ist, mit einem Strafferelement (40) zusammenzuwirken, um eine Endposition desselben zu definieren.

14. Bindevorrichtung nach einem der vorherigen Ansprüche, **dadurch gekennzeichnet, dass** wenigstens ein Puffer-Anschlagelement (33, 34) dazu eingerichtet ist, mit einem Pufferelement (30) zusammenzuwirken, um eine Endposition desselben zu definieren.

15. Bindevorrichtung nach einem der vorherigen Ansprüche, **dadurch gekennzeichnet, dass** wenigstens ein Puffer-Anschlagelement (33, 34) an der Nadelschwinge (11) angeordnet ist.

16. Ballenpresse (1), mit einer Bindevorrichtung (10) nach Anspruch 1.

## Claims

1. Binding device (10) for a baling press (1), comprising a needle link arm (11) which is adjustable relative to a frame (2) of the baling press (1) and has a plurality of binding needles (12) for feeding a binding medium strand (55) into a pressing channel (3), wherein, by means of a plurality of guide elements (17-19, 20-23, 31, 41) for each binding medium strand (55), the binding device (10) defines a guide path starting from a binding medium roller (50), wherein each binding needle (12) extends from a base (13) to a tip (14) on which a first needle guide element (17) is arranged, and wherein the needle link arm (11) can be adjusted by an insertion movement from a first position, in which the binding needles (12) are arranged outside the pressing channel (3), into a second position, in which the binding needles (12) are at least partially inserted into the pressing channel (3), and can be adjusted back into the first position by a return movement, and the binding device further comprising an additional guide element (19) which is independent of the needle link arm (11) and downstream of which the first needle guide element (17) is arranged in the guide path, **characterized in that**
the needle link arm (11) has a second needle guide element (18) which is arranged closer to the base (13) than the first needle guide element (17) and is interposed in the guide path between the additional guide element (19) and the first needle guide element (17), wherein the second needle guide element (18) approaches the additional guide element (19) as a result of the insertion movement and moves away from it as a result of the return movement.

2. Binding device according to claim 1, **characterized in that** the second needle guide element (18) is arranged further forward with respect to a longitudinal axis (Y) in the second position than in the first position and is arranged further back than the additional guide element (19) at least in the first position.

3. Binding device according to any of the preceding claims,
**characterized in that** the binding medium roller (50) of at least one binding medium strand (55) has a braking device (51) which is designed to block a binding medium release as long as a tensioning force in the binding medium strand (55) is below a brake release force.

4. Binding device according to any of the preceding claims,
**characterized in that** it has at least one buffer element (30) which has at least one buffer guide element (31) and is elastically deflectable relative to the frame (2), whereby a first tensioning force can be generated in the binding medium strand (55) which is greater than the brake release force.

5. Binding device according to any of the preceding claims,
**characterized in that** at least one additional guide element (19) is formed by a buffer guide element (31).

6. Binding device according to any of the preceding claims,
**characterized in that** at least one buffer element (30) is designed as a buffer link arm which can be pivoted relative to the frame (2) about a buffer pivot axis (C).

7. Binding device according to any of the preceding claims,
**characterized in that** at least one buffer element (30) has a plurality of buffer guide elements (31) for a plurality of binding medium strands (55).

8. Binding device according to any of the preceding claims,
**characterized in that** it has at least one tightener element (40) which has at least one tightener guide element (41) and is elastically deflectable, whereby a second tensioning force can be generated in the binding medium strand (55) which is smaller than the brake release force.

9. Binding device according to any of the preceding claims,
**characterized in that** at least one tightener element (40) is adjustably connected to the frame (2) independently of the needle link arm (11).

10. Binding device according to any of the preceding claims,
**characterized in that** at least one tightener element (40) is adjustably connected to the needle link arm (11).

11. Binding device according to any of the preceding claims,
**characterized in that** at least one tightener element (40) is pivotable about a tightener pivot axis (D).

12. Binding device according to any of the preceding claims,
**characterized in that** it has a plurality of tightener elements (40) which are assigned to different binding medium strands (55).

13. Binding device according to any of the preceding claims,
**characterized in that** at least one tightener stop element (43, 44) is designed to cooperate with a tightener element (40) in order to define an end position thereof.

14. Binding device according to any of the preceding claims,
**characterized in that** at least one buffer stop element (33, 34) is designed to cooperate with a buffer element (30) in order to define an end position thereof.

15. Binding device according to any of the preceding claims,
**characterized in that** at least one buffer stop element (33, 34) is arranged on the needle link arm (11).

16. Baling press (1) comprising a binding device (10) according to claim 1.

## Revendications

1. Noueur (10) pour une presse à balle comprenant une bielle d'aiguille (11) déplaçable par rapport à un châssis (2) de la presse à balle (1) avec un ensemble d'aiguilles de nouage (12) pour fournir respectivement une ficelle (55) dans un canal de presse (3),
- le noueur (10) ayant un ensemble d'éléments de guidage (17-19, 20-23, 31, 41) pour définir pour chaque ficelle (55), un chemin de guidage partant de la bobine de ficelle (50),
- chaque aiguille de nouage (12) s'étendant d'une base (13) à une pointe (14) à laquelle est un premier élément de guidage d'aiguille (17), et
- la bielle d'aiguille (11) étant déplacée par un mouvement d'engagement à partir d'une première position dans laquelle les aiguilles (12) sont en dehors du canal de presse (3) dans une seconde position, dans laquelle les aiguilles de nouage (12) sont engagées au moins partiellement dans le canal de presse (3) et par un mouvement de retour dans la première position et comprenant également,
- un élément de guidage complémentaire (19) indépendant de la bielle d'aiguille (11) et auquel est associé le premier élément de guidage d'aiguille (17) dans le chemin de guidage,
noueur **caractérisé en ce que**
la bielle d'aiguille (11) a un second élément de guidage d'aiguille (18) plus près de la base (13) que le premier élément de guidage d'aiguille (17) et qui est entre l'élément de guidage complémentaire (19) et le premier élément de guidage d'aiguille (17) dans le chemin de guidage,
le second élément de guidage d'aiguille (18) se rapprochant de l'élément de guidage complémentaire (19) pendant le mouvement d'engagement et s'éloignant de celui-ci par le mouvement de retour.

2. Noueur selon la revendication 1,
**caractérisé en ce que**
dans sa seconde position le second élément de guidage d'aiguille (18) est plus avancé selon l'axe longitudinal (Y) que dans la première position et au moins la première position est plus en arrière que l'élément de guidage complémentaire (19).

3. Noueur selon l'une des revendications précédentes,
**caractérisé en ce que**
le rouleau de ficelle (50) d'au moins une ficelle (55) comporte un frein (51) pour bloquer la libération de la ficelle aussi longtemps que la force de tension dans la ficelle (55) est inférieure à une force de libération de frein.

4. Noueur selon l'une des revendications précédentes,
**caractérisé en ce que**
il comporte au moins un élément tampon (30) ayant au moins un élément de guidage tampon (31) et qui peut être dégagé élastiquement par rapport au châssis (2) de façon à générer une première force de tension dans la ficelle (55), supérieure à la force de libération de frein.

5. Noueur selon l'une des revendications précédentes,
**caractérisé en ce que**
au moins un élément de guidage complémentaire (19) est formé par l'élément de guidage tampon (31).

6. Noueur selon l'une des revendications précédentes,
**caractérisé en ce que**
au moins un élément tampon (30) est en forme de bielle tampon qui peut pivoter par rapport au châssis (2) autour d'un axe de basculement tampon (C).

7. Noueur selon l'une des revendications précédentes,
**caractérisé en ce que**
au moins un élément tampon (30) a un ensemble d'éléments de guidage tampon (31) pour un ensemble de ficelles (55).

8. Noueur selon l'une des revendications précédentes,
**caractérisé en ce que**
il comprend au moins un élément tendeur (40) avec au moins un élément de guidage de tendeur (41) et qui peut être dévié élastiquement pour générer dans la ficelle (55) une seconde force de tension inférieure à la force de libération de frein.

9. Noueur selon l'une des revendications précédentes,
**caractérisé par**
au moins un élément tendeur (40) relié de façon réglable au châssis (2), indépendamment de la bielle d'aiguille (11).

10. Noueur selon l'une des revendications précédentes,
**caractérisé en ce que**
au moins un élément tendeur (40) est relié de manière réglable à la bielle d'aiguille (11).

11. Noueur selon l'une des revendications précédentes,
**caractérisé en ce que**
au moins un élément tendeur (40) peut basculer autour d'un axe de basculement de tendeur (D).

12. Noueur selon l'une des revendications précédentes,
**caractérisé en ce que**
il comporte un ensemble d'éléments tendeurs (40) associés aux différentes ficelles (55).

13. Noueur selon l'une des revendications précédentes,
**caractérisé en ce que**
au moins un élément de butée de tendeur (43, 44) est prévu pour coopérer avec un élément tendeur (40) pour définir la position de fin de course de celui-ci.

14. Noueur selon l'une des revendications précédentes,
**caractérisé en ce que**
au moins un élément de butée tampon (33, 34) est conçu pour coopérer avec un élément tampon (30) pour définir la position de fin de course de celui-ci.

15. Noueur selon l'une des revendications précédentes,
**caractérisé en ce que**
au moins un élément de butée tampon (33, 34) est prévu sur la bielle d'aiguille (11).

16. Presse à balle (1) comportant un noueur (10) selon la revendication 1.
